# EUROPÄISCHE PATENTSCHRIFT

(11) **EP 1 885 969 B1**
(45) Veröffentlichungstag und Bekanntmachung des Hinweises auf die Patenterteilung: **24.08.2011**
(21) Anmeldenummer: 06753720.9
(22) Anmeldetag: 18.05.2006
(51) Int. Cl.: E04F 13/04, E04F 13/08

(54) **BEFESTIGUNGSVORRICHTUNG**
FASTENING DEVICE
DISPOSITIF DE FIXATION

(30) Priorität: 27.05.2005 DE 102005024828
(43) Veröffentlichungstag der Anmeldung: 13.02.2008
(73) Patentinhaber: Xella Baustoffe GmbH, 47119 Duisburg (DE)
(72) Erfinder: LANGER, Peter, 14547 Beelitz OT Fichtenwalde (DE); JURCZYK, Joachim, 82067 Ebenhausen (DE)
(74) Vertreter: Solf, Alexander
(86) Internationale Anmeldenummer: PCT/EP2006/004738
(87) Internationale Veröffentlichungsnummer: WO 2006/125562

(56) Entgegenhaltungen:
- CH-A5- 657 652
- DE-A1- 3 014 233
- FR-A- 781 192
- FR-A- 2 587 269
- FR-A- 2 678 970
- GB-A- 914 125
- US-A- 3 238 835

## Beschreibung

Die Erfindung betrifft eine Befestigungsvorrichtung zur Befestigung eines Bauelementes an einer Baufläche.

Im Hoch- und Tiefbau ist es häufig erforderlich, Bauelemente an Bauflächen zu befestigen. Insbesondere werden auf dieser Gebiet Dämm- und Isolierplatten sowie Brandschutzplatten an einer Rohbaufläche, beispielsweise aus Beton, Porenbeton, Ziegel oder Kalksandstein befestigt.

Diese Befestigung erfolgt derzeit entweder mittels Schienensystemen, durch Verklebung, durch Verdübelung oder durch eine Kombination aus Verklebung und Verdübelung.

Eine Kombination aus Verklebung und Verdübelung wird bei nicht tragfähigen Untergründen angewendet, bei denen befürchtet werden muß, daß eine bloße Verklebung mit dem Untergrund eine erforderliche Haftzugfestigkeit nicht aufweist.

Um eine Verdübelung vorzunehmen, sind zahlreiche Arbeitsschritte erforderlich. Es werden Dübellöcher gebohrt und vom Bohrgut befreit, anschließend werden spezielle Dübelhülsen mit eventuell schon vormontierten Schrauben in die Bohrlöcher gesteckt, und danach werden die Schrauben eingeschraubt. Dieser Arbeitsaufwand verursacht bis zu 20 % der Gesamtkosten eines Wärmedämmverbundsystems. CH657652 A5 beschreibt eine Befestigungsvorrichtung mit allen Merkmalen des Oberbegriffs des Anspruchs 1.

Der Erfindung liegt die Aufgabe zugrunde, eine Befestigungsvorrichtung sowie ein Verfahren zur Verfügung zu stellen, mittels welche der Arbeitsaufwand bei der Befestigung von Bauelementen reduziert wird und dennoch hohe Tragfähigkeiten erreicht werden.

Die Lösung der Aufgabe erfolgt mit den Merkmalen des Anspruches 1 bzw. 13.

Gemäß der Erfindung weist eine Befestigungsvorrichtung die Merkmale des Anspruchs 1 auf. Mittels der Anschlußstruktur wird gewährleistet, daß das Bauelement mit der Baufläche über die Haftvermittlungsmasse sicher verbunden ist, ohne daß es erforderlich ist, in der Baufläche Bohrungen oder andere Verankerungen vorzunehmen. Dabei wird durch die Eingriffsstruktur die Voraussetzung für eine Verbindung zur Baufläche geschaffen, welche hohe Tragfähigkeiten erreicht.

Die Eingriffsstruktur einer erfindungsgemäßen Befestigungsvorrichtung weist Verzahnungselemente auf. Dadurch vergrößert sich die mit Haftvermittlungsmasse in Kontakt tretende Oberfläche, wodurch die Haftzugfestigkeit weiter erhöht wird.

Da Verzahnungselemente als Stäbe mit im wesentlichen kreisförmigem Querschnitt ausgebildet sind, kann die Eingriffsstruktur aufgrund der runden Außenkontur der Stäbe besonders gut gegenüber der Baufläche ausgerichtet werden. Die runde Außenkontur solcher Stäbe hat ferner den Vorteil, daß Spannungsspitzen, insbesondere aufgrund von Kanten, vermieden werden.

Ferner weisen die Verzahnungselemente Verdickungen auf. Solche Verdickungen führen zu einer weiteren Verzahnung der Eingriffsstruktur mit der Haftvermittlungsmasse, wodurch die Tragfähigkeit weiter erhöht wird.

Untersuchungen haben ergeben, daß besonders hohe Zugfestigkeiten erreicht werden, wenn die Eingriffsstruktur als radförmige Struktur mit aussteifenden Speichen ausgebildet ist.

Die Haftzugfestigkeit bzw. Tragfähigkeit kann weiter erhöht werden, wenn zwischen den aussteifenden Speichen Verstärkungsstreben vorgesehen sind, denn die Verstärkungsstreben bilden zusammen mit den Speichen eine Netzstruktur, welche die Haftvermittlungsmasse besonders gut aufnimmt.

In einer weiter bevorzugten Ausführungsform einer erfindungsgemäßen Befestigungsvorrichtung weist die Anschlußstruktur Halterippen auf. Mittels der Haltenasen kann die Befestigungsvorrichtung direkt in der Öffnung eines Bauelementes verankert werden.

Alternativ können die Halterippen auch Teil eines Schnellverbindungssystems sein, insbesondere um eine tragfähige Steckverbindung mit einer Kraftverteilungstruktur, insbesondere einer Rastkappe herzustellen.

Eine erfindungsgemäße Befestigungsvorrichtung läßt sich in großen Stückzahlen besonders kostengünstig produzieren, wenn diese einstückig hergestellt ist. Dies gilt insbesondere, wenn die Befestigungsvorrichtung aus Kunststoff im Kunststoffspritzgußverfahren gefertigt ist.

Mit dem in Anspruch 13 beanspruchten Verfahren kann innerhalb kurzer Zeit die Befestigung eines Bauelementes an einer Baufläche erfolgen, wobei die Verbindung eine hohe Tragfähigkeit aufweist. Eine zeitintensive Verdübelung und Verschraubung des Bauelementes in der Baufläche ist gemäß dem Verfahren nicht erforderlich.

Es zeigen:
- Fig. 1: eine erste bevorzugte Ausführungsform einer erfindungsgemäßen Befestigungsvorrichtung in einer Schnittdarstellung,
- Fig. 2: die in Fig. 1 dargestellte erfindungsgemäße Befestigungsvorrichtung in einer Ansicht gemäß dem Pfeil A in Fig. 1,
- Fig. 3: die in den Fig. 1 und 2 dargestellte Befestigungsvorrichtung im eingebauter, Zustand in einer Schnittdarstellung gesäß III-III in Fig. 2,

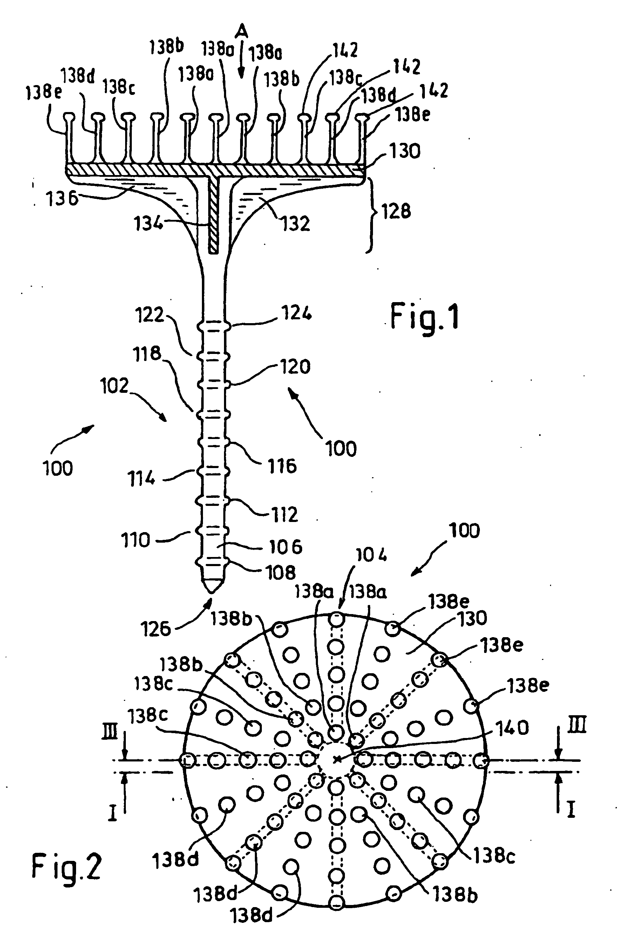

Fig. 1 zeigt eine Befestigungsvorrichtung 100 mit einer Anschlußstruktur 102 und einer Eingriffsstruktur 104.

Die Anschlußstruktur 102 umfaßt einen im Querschnitt im wesentlichen kreisförmigen, dünnwandigen Kunststoff-Stift 106, an dessen Umfang eine erste Halterippe 108, eine zweite Halterippe 110, eine dritte Halterippe 112, eine vierte Halterippe 114, eine fünfte Halterippe 116, eine sechste Halterippe 118, eine siebte Halterippe 120, eine achte Halterippe 122 und eine neunte Halterippe 124 angeordnet sind. Der Kunststoff-Stift 106 läuft an seiner Einsteckseite 126 spitz zu, damit er leicht in eine Öffnung eingesteckt werden kann. An der der Einsteckseite 126 gegenüberliegenden Seite des Kunststoff-Stiftes 106 weist der Kunststoff-Stift 106 einen Verbindungsbereich 126 mit größerem Durchmesser auf. Der Verbindungsbereich 128 stellt eine Verbindung zu einer im Querschnitt kreisförmiger: Grundplatte 130 her, welche Teil der Eingriffsstruktur 104 ist.

Der Kunststoff-Stift 106 und die Grundplatte 130 der Eingriffsstruktur 104 sind ferner über eine erste Aussteifungsrippe 132, eine zweite Aussteifungsrippe 134, eine dritte Aussteifungsrippe 136 und eine vierte Aussteifungsrippe (nicht gezeigt) miteinander verbunden, wobei Aussteifungsrippen 132, 134, 136 und 138 im wesentlichen kreuzförmig zueinander angeordnet sind.

Auf der Grundplatte 130 sind Verzahnungselemente 138 angeordnet. Die Anordnung der Verzahnungselemente 138 geht aus Fig. 2 hervor, welche die in Fig. 1 dargestellte Befestigungsvorrichtung 100 in einer Ansicht gemäß dem Pfeil A in Fig. 1 zeigt.

Die Verzahnungselemente 138 sind in Gruppen (a, b, c, d, e) von 8 bzw. 16 angeordnet, wobei die zu einer Gruppe gehörenden Verzahnungselemente auf jeweils konzentrisch zueinander angeordneten Kreisen angeordnet sind. Die insgesamt 8 Verzahnungselemente 138 a sind auf einem gedachten Kreis mit einem Radius von ca. 8 mm angeordnet. Die jeweils 16 Verzahnungselemente 138 b, 138 c, 138 d und 138 e liegen auf gedachten Kreisen mit Radien von ca. 15, 24, 32 bzw. 40 mm. Die Verzahnungselemente 138 sind so angeordnet, daß zwischen zwei benachbarten Verzahnungselementen ein und derselben Gruppe stets der gleiche Abstand besteht.

Die Verzahnungselemente 13B sind ferner so zueinander angeordnet, daß die korrespondierenden Verzahnungselemente 138 auf von der Mitte 140 der Grundplatte 130 ausgehenden geradlinigen Strahlen liegen.

Wie in Fig. 1 zu sehen, weisen die Verzahnungselemente 138 an den der Grundplatte 130 gegenüber liegenden Enden Verdickungen 142 auf.

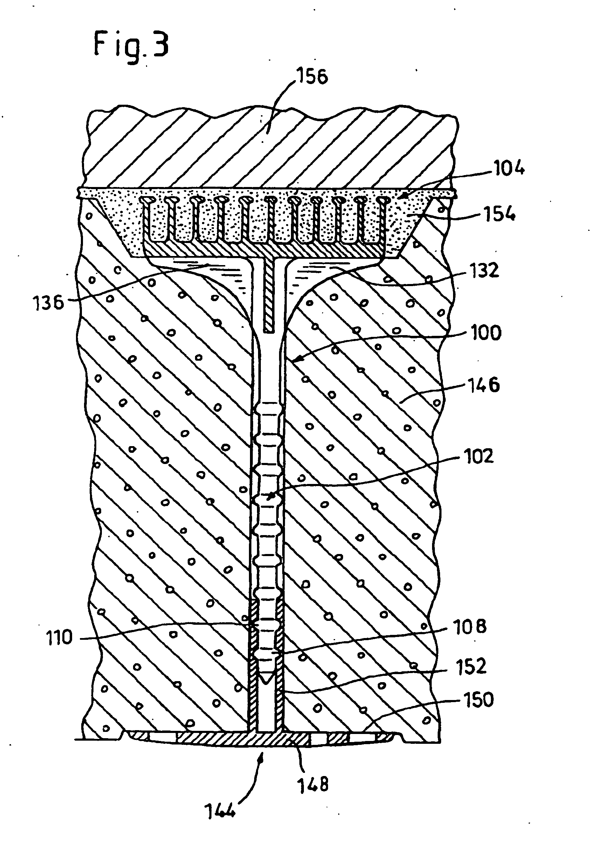

Fig. 3 zeigt die in den Fig. 1 und 2 dargestellte Befestigungsvorrichtung 140 im eingebauten Zustand zwischen einer Dämmplatte 146 und einer Baufläche 156 in einer Schnittdarstellung.

Die Anschlußstruktur 102 der Befestigungsvorrichtung 100 ist in der Öffnung 144 einer Dämmplatte 146 verankert. Die erste Halterippe 108 und die zweite Halterippe 110 sind im Eingriff mit einer Rastkappe 148, welche eine tellerförmige Auflagefläche 150 sowie eine sich an die Auflagefläche 150 anschließende hohlzylinderförmige Verbindungsstruktur 152 umfaßt. Das Befestigungselement 100 und die Rastkappe 148 sind miteinander verrastet, wodurch die Befestigungsvorrichtung mit der Dämmplatte 146 formschlüssig verbunden ist. Alternativ kann anstelle einer Rastkappe auch eine Klemmkappe verwendet werden, bei der die Verbindungsstruktur kraftschlüssig mit der Klemmkappe verbunden ist. Gleichwohl bleibt es auch bei dieser Ausführungsform bei einem formschlüssigen Verbund von Befestigungsvorrichtung und Dämmplatte 146.

Die Eingriffsstruktur 104 ist vollständig von einer Haftvermittlungsmasse 154 umschlossen, wobei die Haftvermittlungsmasse 154 ferner auch flächig mit einer Baufläche 156 verbunden ist. Die Eingriffsstruktur 104 und die Baufläche 156 sind der über die Haftvernittlungsmasse 154 aufgrund der Haftwirkung kraftschlüssig bzw. stoffschlüssig und aufgrund der Geometrie der Eingriffsstruktur 104, insbesondere aufgrund der Verdickungen 142, formschlüssig verbunden.

Die in den Fig. 1 bis 3 gezeigte Befestigungsvorrichtung 100 ist als zweiteilige Struktur aus Kunststoffspritzguß gefertigt.

Es ist auch möglich, die Befestigungsvorrichtung 100 als mehrteiliges Bauteil herzustellen oder die Befestigungsvorrichtung 100 aus einem anderem Werkstoff, insbesondere aus Metall, herzustellen.

Das erfindungsgemäße Verfahren, das nachfolgend anhand der Fig. 3 beschrieben ist, ist sowohl bei harten Bauelementen wie beispielsweise Mineraldämmplatten oder Blähglasplatten als auch bei weichen Bauelementen z. B. aus Styropor oder Mineralwolle anwendbar.

Anhand von Fig. 3 wird dargestellt, wie erfindungsgemäße Befstigungsvorrichtung zusammen mit einer weichen Dämmplatte verwendet werden können. Wie aus Fig. 3 zu erkennen ist, weist die Dämmplatte 146 vor dem Einstecken der Befestigungsvorrichtung 100 eine schmale Durchgangsöffnung zur Aufnahme der Anschlußstruktur 102 sowie einen breite eingeschränkte Öffnung zur Aufnahme der Eingriffsstruktur 104 auf. Die Anschlußstruktur 102 der Befestigungsvorrichtung 100 wird in die Durchgangsöffnung der Dämmplatte 146 eingeführt und dann so weit hineingedrückt, daß die Aussteifungsrippen 132, 136 in der Dämmplatte 146 stecken. Bei der Erstellung der Öffnung zur Aufnahme der Eingriffssturktur 104 muß folglich lediglich die Geometrie der Eingriffsstruktur berücksichtigt werden. Die Öffnung zur Aufnahme der Eingriffsstruktur 104 ist bevorzugt so tief, daß nach dem Eindrücken der Befestigungsvorrichtung 100 in die Dämmplatte 146 die Eingriffsstruktur 104 und die Dämmplatte 146 einen Abschluß in einer Ebene bilden. Dies ist insbesondere dann vorteilhaft, wenn die Haftvermittlungsmasse 154 für die Bereiche der Bauplatte 146 vorgesehen ist, in welchen Befestigungsvorrichtungen 100 angeordnet sind.

Wenn Haftvermittlungsmasse 154 für den gesamten Bereich zwischen dem Bauelement 146 und der Baufläche 156 vorgesehen ist, kann es auch vorteilhaft sein, wenn die Eingriffsstruktur aus der Bauplatte 146 herausragt.

Bei besonders weichen Dämmplatten kann es ausreichend sein, daß die Dämmplatte lediglich eine Öffnung zur Aufnahme der Anschlußstruktur aufweist, wenn der Werkstoff der Dämmplatte 146 es zulässt, daß die Anschlußstruktur 102 in die Durchgangsöffnung der Dämmplatte 146 eingeführt und dann soweit wie erforderlich in die Dämmplatte 146 hineingedrückt werden kann.

Die Verwendung der erfindungsgemäßen Befestigungsvorrichtungen ist besonders einfach, wenn die Dämmplatten bereits Öffnungen aufweisen. Dazu können die Mineraldämmplatten insbesondere fabrikseitig vorgebohrt oder bereits mit Öffnungen produziert worden sein.

Es ist besonders vorteilhaft, wenn die Öffnungen der Dämmplatten eine auf die Befestigungvorrichtungen abgestimmte Geometrie aufweisen, welche ermöglicht, daß die Haftvermittlungsmasse die Eingriffsstruktur einer eingesteckten Befestigungsvorrichtung gut umschließen kann und welche gegebenenfalls sogar bereits die Positionierung des eingesteckten Befestigungselementes gegenüber der Dämmplatte festlegt. Positionierungsfehler bei der Verbindung des Befestigungselementes mit der Bauplatte sind dadurch nahezu ausgeschlossen.

Vorgefertigte Öffnungen ermöglichen es, auf der Baustelle die Befestigungsvorrichtungen ohne großen Aufwand in die Mineraldämmplatte hineinzustecken und wie in Figur 3 gezeigt mit einer Rastkappe mittels Schnellverschlußsystem tragfähig zu verbinden. Danach wird auf der Rückseite der Mineraldämmplatte Haftvermittler aufgebracht, der die Befestigungsvorrichtung, insbesondere die Eingriffstruktur umschließt. Die Mineraldämmplatte wird dann an einer Baufläche ausgerichtet und angedrückt, wobei der Klebemörtel die Dämmplatte an der Wand verklebt. Diese Verklebung stellt die Verankerung der Dämmplatte zum tragfähigen Untergrund sicher. Das Befestigungsmittel stellt die mechanische Verankerung der Dämmplatte mit der Verklebung her.

Um einen optimalen Verarbeitungsablauf auf der Baustelle zu ermöglichen, wird die Bohrung sowie eine rückseitige Vertiefung bereits fabrikmäßig hergestellt. Das Befestigungsmittel kann ebenfalls bereits fabrikmäßig vormontiert sein. In diesem Fall muss auf der Baustelle lediglich ein Batzen Klebemörtel auf die Bauplatte oder die Baufläche aufgetragen und die Dämmplatte ausgerichtet und angedrückt werden.

Wie vorstehend beschrieben, ermöglicht es die erfindungsgemäße Befestigungsvorrichtung unabhängig von der Härte der Dämmplatten, eine tragfähige Verbindung mit der Baufläche herzustellen, und schafft die Voraussetzung dafür, den Arbeitsaufwand bei der Befestigung von Bauelementen an Bauflächen zu reduzieren und dennoch hohe Tragfähigkeiten zu erzielen.

## Patentansprüche

1. Befestigungsvorrichtung (100) zur Befestigung eines Bauelements (146, 346), wie z.B. einer Dämm-, Isolier- oder Brandschutzplatte, an einer Baufläche (156, 356) mit einer einen in einer Öffnung (144) eines Bauelements (146, 346) verankerbaren Stift (106) aufweisenden Anschlussstruktur (102, 202, 302) zur Verbindung mit dem Bauelement (146, 346) und mit einer eine Grundplatte (130) aufweisenden Eingriffsstruktur (104, 204, 304), die mittels einer Haftvermittlungsmasse (154, 345) gegenüber der Baufläche (156, 356) festlegbar ist, **dadurch gekennzeichnet, dass**
die Eingriffsstruktur (104, 204, 304) zudem auf der Grundplatte (130) angeordnete Verzahnungselemente (138) zum Eingreifen in die mit der Baufläche (156, 356) verbundenen Haftvermittlungsmasse (154, 354) aufweist, und wobei
die Verzahnungselemente (138) als von der Grundplatte (130) abstehende im Querschnitt im Wesentlichen kreisförmige Stäbe ausgebildet sind, die Verdickungen insbesondere an den der Grundplatte (130) gegenüberliegenden Enden aufweisen.

2. Befestigungsvorrichtung nach Anspruch 1,
**dadurch gekennzeichnet, dass**
die Verzahnungselemente (138) in Gruppen, insbesondere auf gedachten konzentrischen Kreisen angeordnet sind zwischen zwei benachbarten Verzahnungselementen (138) ein und derselben Gruppe stets der gleiche Abstand besteht und die Verzahnungselemente (138) so zueinander angeordnet sind, dass die korrespondierenden Verzahnungselemente (138) auf von der Mitte (140) der Grundplatte (130) ausgehende gedachten Strahlen liegen.

3. Befestigungsvorrichtung nach einem oder mehreren der Ansprüche 1 und/oder 2,
**dadurch gekennzeichnet, dass**
der Stift (106) Halterippen (108) aufweist.

4. Befestigungsvorrichtung nach einem oder mehreren der Ansprüche 1 bis 3,
**dadurch gekennzeichnet, dass**
der Stift (106) an seiner Einsteckseite (126) spitz zuläuft.

5. Befestigungsvorrichtung nach einem oder mehreren der Ansprüche 1 bis 4,
**dadurch gekennzeichnet, dass**
der Stift (106) an der der Einsteckseite (126) gegenüberliegenden Seite einen Verbindungsbereich (128) mit größerem Durchmesser aufweist, der eine Verbindung zur Eingriffsstruktur (104, 204, 304) herstellt.

6. Befestigungsvorrichtung nach einem oder mehreren der Ansprüche 1 bis 5,
**dadurch gekenntzeichnet,** dass
eine Kraftverteilungsstruktur, insbesondere eine Rastkappe (148) vorgesehen ist, welche die Eingriffsstruktur (104, 204, 304) an dem Bauelement (146, 346) an dessen der Eingriffsstruktur gegenüberliegenden Seite sichert.

7. Befestigungsvorrichtung nach Anspruch 6,
**dadurch gekennzeichnet, dass**
die Rastkappe.(148) im Eingriff mit Halterippen (108) steht, so dass das Befestigungselement (100) und die Rastkappe (148) formschlüssig mit einander verbunden sind.

8. Befestigungsvorrichtung nach Anspruch 6 und/oder 7,
**dadurch gekennzeichnet, dass**
die Rastkappe (148) eine tellerförmige Auflagefläche (150) sowie eine sich anschließende hohlzylinderförmige Verbindungsstruktur (152) umfasst.

9. Befestigungsvorrichtung nach einem oder mehreren der Ansprüche 1 bis 6,
**dadurch gekennzeichnet, dass**
eine Kraftverteilungsstruktur in Form einer Klemmkappe vorgesehen ist, welche die Eingriffsstruktur (104, 204, 304) an dem Bauelement (146, 346) an dessen der Eingriffsstruktur gegenüberliegenden Seite sichert, wobei die Befestigungsvorrichtung (100) und die Klemmkappe kraftschlüssig mit einander verbunden sind.

10. Befestigungsvorrichtung nach einem oder mehreren der Ansprüche 1 bis 3 sowie 4 bis 9,
**dadurch gekennzeichnet, dass**
zwischen dem Stift (106) und der Grundplatte (130) Aussteifungsrippen (132) vorgesehen sind.

11. Befestigungsvorrichtung nach einem oder mehreren der Ansprüche 1 bis 10,
**dadurch gekennzeichnet, dass**
die Anschlussstruktur (102, 202, 302) gemeinsam mit der Eingriffsstruktur (104, 204, 304) als einheitliches Bauteil einstückig hergestellt ist.

12. Befestigungsvorrichtung nach einem oder mehreren der Ansprüche 1 bis 11,
**dadurch gekennzeichnet, dass**
die Anschlussstruktur (102, 202, 302) und die Eingriffsstruktur (104, 204, 304) aus Kunststoff oder Metall gefertigt sind.

13. Verfahren zur Befestigung eines Bauelements (146, 346) an einer Baufläche (156, 356) mittels einer Befestigungsvorrichtung nach einem oder mehreren der Ansprüche 1 bis 12, bei welchen zunächst die Befestigungsvorrichtung an dem Bauelement (146, 346) befestigt wird, auf die Baufläche (156, 356) oder auf die Eingriffsstruktur (104, 204, 304) der Befestigungsvorrichtung (100) eine Haftvermittlungsmasse (154, 354) aufgetragen wird und anschließend das Bauelement (146, 346) so gegen die Baufläche (156, 356) gedrückt und ausgerichtet wird, dass die Eingriffsstruktur (104, 204, 304) in die Haftvermittlungsmasse (154, 354) eindringt und von dieser mindestens teilweise umschlossen wird, um im ausgehärteten Zustand der Haftvermittlungsmasse (154, 354) mit dieser eine formschlüssige Verbindung zu bildern.

## Claims

1. A fastening device (100) for fastening a structural element (146, 346), such as e.g. a sound- insulating panel, an insulating panel or a fireproof panel, to a structural surface (156, 356), having a joining structure (102, 202, 302), with a pin (106) anchorable in an opening (144) of a structural element (146, 346), for connection to the structural element (146, 346) and having an engagement structure (104, 204, 304), with a base plate (130), securable in position with respect to the structural surface (156, 356) by means of a bonding compound (154, 345), **characterised in that** the engagement structure (104, 204, 304) has furthermore toothed members (138), arranged on the base plate (130), for engaging the bonding compound (154, 354) connected to the structural surface (156, 356), and wherein the toothed members (138) are in the form of rods which project from the base plate (130) and which are substantially circular in cross-section, these rods having thickenings in particular at the ends opposite the base plate (30).

2. A fastening device according to claim 1, **characterised in that** the toothed members (138) are arranged in groups, in particular on notional concentric circles, two adjacent toothed members (138) of one and the same group always have the same spacing and the toothed members (138) are arranged in such a manner in relation to one another that the corresponding toothed members (138) lie on notional rays issuing from the centre (140) of the base plate (130).

3. A fastening device according to one or more of claims 1 and/or 2, **characterised in that** the pin (106) has holding ribs (108).

4. A fastening device according to one or more of claims 1 to 3, **characterised in that** the pin (106) tapers at its insertion end (126).

5. A fastening device according to one or more of claims 1 to 4, **characterised in that** at the end opposite the insertion end (126), the pin (106) has a connecting region (128) of larger diameter, which connecting region (128) produces a connection to the engagement structure (104, 204, 304).

6. A fastening device according to one or more of claims 1 to 5, **characterised in that** a force distribution structure, in particular a locking cap (148), is provided and secures the engagement structure (104, 204, 304) against the structural element (146, 346) on the side of the latter opposite the engagement structure.

7. A fastening device according to claim 6, **characterised in that** the locking cap (148) engages holding ribs (108), so that the fastening element (100) and the locking cap (148) are connected to one another in a form-locked manner.

8. A fastening device according to claim 6 and/or 7, **characterised in that** the locking cap (148) comprises a plate-shaped bearing surface (150) and an adjoining hollow-cylinder-shaped connection structure (152).

9. A fastening device according to one or more of claims 1 to 6, **characterised in that** a force distribution structure in the form of a clamping cap is provided and secures the engagement structure (104, 204, 304) against the structural element (146, 346) on the side of the latter opposite the engagement structure, wherein the fastening device (100) and the clamping cap are connected to one another in a force-locked manner.

10. A fastening device according to one or more of claims 1 to 3 and 4 to 9, **characterised in that** stiffening ribs (132) are provided between the pin (106) and the base plate (130).

11. A fastening device according to one or more of claims 1 to 10, **characterised in that** the joining structure (102, 202, 302) together with the engagement structure (104, 204, 304) are manufactured in one piece as a standard part.

12. A fastening device according to one or more of claims 1 to 11, **characterised in that** the joining structure (102, 202, 302) and the engagement structure (104, 204, 304) are manufactured from a plastics material or metal.

13. A method of fastening a structural element (146, 346) to a structural surface (156, 356) by means of a fastening device according to one or more of claims 1 to 12, in which first of all the fastening device is secured to the structural element (146, 346), a bonding compound (154, 354) is applied to the structural surface (156, 356) or to the engagement structure (104, 204, 304) of the fastening device (100) and then the structural element (146, 346) is pressed against the structural surface (156, 356) and oriented in such a manner that the engagement structure (104, 204, 304) penetrates the bonding compound (154, 354) and is at least partially surrounded by the latter in order to form a form-locked connection to the bonding compound (154, 354) in the hardened state of the latter.

## Revendications

1. Dispositif de fixation (100) pour la fixation d'un élément de construction (146, 346), tel que par exemple un panneau calorifuge, un panneau isolant ou un panneau ignifuge, sur une surface de construction (156, 356) doté d'une structure de raccordement (102, 202, 302) présentant une broche (106) pouvant être ancrée dans une ouverture (144) d'un élément de construction (146, 346) pour la liaison avec l'élément de construction (146, 346) et d'une structure d'engrènement (104, 204, 304) présentant un panneau de base (130), qui peut être fixée au moyen d'une masse adhésive (154, 345) par rapport à la surface de construction (156, 356), **caractérisé en ce que**
la structure d'engrènement (104, 204, 304) présente en plus des éléments de denture (138) disposés sur le panneau de base (130) pour l'engrènement dans la masse adhésive (154, 354) reliée à la surface de construction (156, 356), et dans lequel
les éléments de denture (138) sont conçus sous forme de barres dépassant du panneau de base (130) et sensiblement circulaires en section, qui présentent des épaississements en particulier sur les extrémités faisant face au panneau de base (130).

2. Dispositif de fixation selon la revendication 1,
**caractérisé en ce que**
les éléments de denture (138) sont disposés en groupes, en particulier sur des cercles concentriques imaginaires, avec toujours le même espacement entre deux éléments de denture (138) voisins d'un seul et même groupe et les éléments de denture (138) sont disposés les uns par rapport aux autres de telle sorte que les éléments de denture (138) correspondants sont situés sur des faisceaux imaginaires partant du centre (140) du panneau de base (130).

3. Dispositif de fixation selon l'une quelconque ou plusieurs des revendications 1 et/ou 2,
**caractérisé en ce que**
la broche (106) présente des nervures de retenue (108).

4. Dispositif de fixation selon l'une quelconque ou plusieurs des revendications 1 à 3,
**caractérisé en ce que**
la broche (106) se termine en pointe sur son côté d'enfichage (126).

5. Dispositif de fixation selon l'une quelconque ou plusieurs des revendications 1 à 4,
**caractérisé en ce que**
la broche (106) présente sur le côté opposé au côté d'enfichage (126) une zone de liaison (128) avec un diamètre plus grand, qui établit une liaison avec la structure d'engrènement (104, 204, 304).

6. Dispositif de fixation selon l'une quelconque ou plusieurs des revendications 1 à 5,
**caractérisé en ce que**
une structure de répartition de force, en particulier un capuchon d'encliquetage (148), est prévue, laquelle bloque la structure d'engrènement (104, 204, 304) sur l'élément de construction (146, 346) sur son côté faisant face à la structure d'engrènement.

7. Dispositif de fixation selon la revendication 6,
**caractérisé en ce que**
le capuchon d'encliquetage (148) est en engrènement avec des nervures de retenue (108), de sorte que l'élément de fixation (100) et le capuchon d'encliquetage (148) sont reliés l'un à l'autre par complémentarité de formes.

8. Dispositif de fixation selon la revendication 6 et/ou 7,
**caractérisé en ce que**
le capuchon d'encliquetage (148) comprend une surface d'appui (150) en forme de plateau et une structure de liaison (152) en forme de cylindre creux se raccordant à la première.

9. Dispositif de fixation selon l'une quelconque ou plusieurs des revendications 1 à 6,
**caractérisé en ce que**
une structure de répartition de force est prévue sous la forme d'un capuchon de serrage, qui bloque la structure d'engrènement (104, 204, 304) sur l'élément de construction (146, 346) sur son côté faisant face à la structure d'engrènement, dans lequel le dispositif de fixation (100) et le capuchon de serrage sont reliés l'un à l'autre par adhérence.

10. Dispositif de fixation selon l'une quelconque ou plusieurs des revendications 1 à 3 et 4 à 9,
**caractérisé en ce que**
des nervures de renfort (132) sont prévues entre la goupille (106) et le panneau de base (130).

11. Dispositif de fixation selon l'une quelconque ou plusieurs des revendications 1 à 10,
**caractérisé en ce que**
la structure de raccordement (102, 202, 302) est fabriquée d'une seule pièce conjointement avec la structure d'engrènement (104, 204, 304) sous forme d'élément de construction homogène.

12. Dispositif de fixation selon l'une quelconque ou plusieurs des revendications 1 à 11,
**caractérisé en ce que**
la structure de raccordement (102, 202, 302) et la structure d'engrènement (104, 204, 304) sont fabriquées en plastique ou métal.

13. Procédé pour la fixation d'un élément de construction (146, 346) sur une surface de construction (156, 356) au moyen d'un dispositif de fixation selon l'une quelconque ou plusieurs des revendications 1 à 12, selon lesquels le dispositif de fixation est d'abord fixé sur l'élément de construction (146, 346), une masse adhésive (154, 354) est appliquée sur la surface de construction (156, 356) ou sur la structure d'engrènement (104, 204, 304) du dispositif de fixation (100) et ensuite l'élément de construction (146, 346) est appuyé contre la surface de construction (156, 356) et orienté de telle sorte que la structure d'engrènement (104, 204, 304) pénètre dans la masse adhésive (154, 354) et est entourée au moins partiellement par celle-ci, afin de former, lorsque la masse adhésive (154, 354) est durcie, une liaison par complémentarité de formes avec celle-ci.
